# EUROPEAN PATENT APPLICATION

(11) **EP 4 344 048 A1**
(43) Date of publication of application: **27.03.2024**
(21) Application number: 23152394.5
(22) Date of filing: 19.01.2023
(51) Int. Cl.: H02P 1/02, H02P 29/028

(54) **MOTOR WITH A PLURALITY OF STATOR MODULES AND DRIVING METHOD THEREOF**

(30) Priority: 22.09.2022 TW 111135942
(71) Applicant: Sunonwealth Electric Machine Industry Co., Ltd., Kaohsiung City (TW)
(72) Inventor: JIAN, Wei-Qian, Kaohsiung City (TW); HONG, Ching-Shen, Kaohsiung City (TW)
(74) Representative: Wagner, Jürgen

(57) **Abstract**

A motor with a plurality of stator modules (1) and a driving method of the motor are provided. The motor includes a plurality of stator modules (1), a control unit (2), and a rotor (3). The plurality of stator modules (1) is detachably assembled into a motor stator. Each of the plurality of stator modules (1) includes a driving circuit (11). Each driving circuit (11) is electrically connected to a plurality of coils of an associated one of the plurality of stator modules (1). The control unit (2) is coupled to the driving circuits (11). The control unit (2) designates one of the plurality of stator modules (1) as a starting unit (1a) and designates remaining stator modules (1) as relay units (1b). The rotor (3) includes at least one magnetic member (31) corresponding to the plurality of coils of the plurality of stator modules (1). The starting unit (1a) drives the rotor (3) to rotate. The relay units (1b) drive the rotor (3) according to a phase change of the starting unit (1a).

## Description

### BACKGROUND OF THE INVENTION

### 1. Field of the Invention

The present invention relates to a motor driving mechanism and, more particularly, to a motor with a plurality of stator modules and a driving method of the motor, in which the plurality of stators modules is synchronously activated and still can operate when a sensing unit or any stator module malfunctions.

### 2. Description of the Related Art

A conventional motor includes a stator, a rotor, and a driving circuit. Coils of different phases are wound around the stator. The driving circuit alternately supplies electric current into the coils of different phases according to the phase change, thereby driving the rotor to rotate. Furthermore, the conventional motor includes a sensing module to detect a magnetic field change caused by rotation of the rotor, thereby determining the rotational position and the rotating speed of the rotor and converting them into phase information which is provided to the driving circuit for phase switching. However, when the sensing module malfunctions and, thus, fails to provide accurate detection data or any coil of the stator is open circuit and unable to supply electric current, the stator cannot provide a stable torque for the rotor, such that the rotation efficiency of the motor is reduced and unstable or even causes the motor to stop operation. Therefore, a vehicle or equipment using the motor may suddenly lose power, resulting in a traffic accident or damage to equipment.

Thus, it is necessary to improve the conventional motor.

### SUMMARY OF THE INVENTION

To solve the above problem, it is an objective of the present invention to provide a motor with a plurality of stator modules, of which the operation can be maintained when a sensing unit or any stator module malfunctions.

It is another objective of the present invention to provide a motor with a plurality of stator modules which permits stable rotation under the same phase.

It is a further objective of the present invention to provide a motor driving method which can drive the motor to operate even when a sensing unit or any stator module malfunctions.

It is still another objective of the present invention to provide a motor driving method which can enhance the working efficiency of the motor.

As used herein, the term "a", "an" or "one" for describing the number of the elements and members of the present invention is used for convenience, provides the general meaning of the scope of the present invention, and should be interpreted to include one or at least one. Furthermore, unless explicitly indicated otherwise, the concept of a single component also includes the case of plural components.

As used herein, the term "coupling" is used to indicate a state permitting transfer of energy between two objects, such as two circuits connected by metal wires can transmit current signals, or two circuits connected by optical fibers can transmit optical signals, etc., which can be appreciated by one having ordinary skill in the art to which the present invention belongs.

A motor according to the present invention includes a plurality of stator modules, a control unit, and a rotor. The plurality of stator modules is detachably assembled into a motor stator. Each of the plurality of stator modules includes a driving circuit. Each driving circuit is electrically connected to a plurality of coils of an associated one of the plurality of stator modules. The control unit is coupled to the driving circuits. The control unit designates one of the plurality of stator modules as a starting unit and designates remaining stator modules as relay units. The rotor includes at least one magnetic member corresponding to the plurality of coils of the plurality of stator modules. The starting unit drives the rotor to rotate. The relay units drive the rotor according to a phase change of the starting unit.

A motor driving method according to the present invention is applied to a motor with a plurality of stator modules and includes: using a control unit to designate one of the plurality of stator modules as a starting unit and designate remaining stator modules as relay units; using the control unit to determining whether the starting unit operates normally, in a state that it is determined that the starting unit is incapable of operating normally, the control unit designates one of the relay units as a new starting unit and proceeds with determination again; and using the control unit to switch a phase of the starting unit to drive a rotor to rotate relative to the starting unit when it is determined that the starting unit is capable of operating normally, with the remaining relay units operating according to a phase change of the starting unit, such that a synchronous torque is generated between the rotor and the plurality of stator modules.

Thus, in the motor with a plurality of stator modules and the driving method of the motor according to the present invention, by designating one of the stator modules as the starting unit, the starting unit can guide all stator modules to generate a synchronous torque without using a sensing unit or when the sensing unit malfunctions, such that the motor rotor can be smoothly started and maintain a stable rotating speed. In addition, the motor can still be driven to operate when a sensing unit or any stator module malfunctions. Therefore, the present invention enhances the motor working efficiency, enhances operational safety of the motor, and simplifies the motor structure.

In an example, the control unit receives an electromotive force signal of the starting unit via the driving circuit. Thus, the control unit can determine the rotational position and the rotating speed of the rotor according to the electromotive force signal without using a Hall sensor, thereby simplifying the motor structure and the driving method thereof.

In an example, the motor further includes a sensing module coupled to the control unit, and the sensing module detects a magnetic field change caused by a movement of the rotor. Thus, the control unit can determine the rotational position and the rotating speed of the rotor via the sensing module and can use the rotational position and the rotating speed to control phase switching of the stator modules, thereby starting the motor to rotate and stabilizing the rotating speed.

In an example, the sensing module includes a plurality of sensing units disposed on one of the plurality of stator modules, and each of the plurality of sensing units is a Hall sensor. Thus, the sensing units can detect the position of the magnetic member of the rotor through the magnetic field change without interfering with the electric current of the coils, thereby enhancing the detection conversion efficiency.

In an example, when the starting unit is incapable of operating normally, the control unit randomly designates one of the relay units as a new starting unit. Thus, the control unit can rapidly decide the replacing stator module, thereby simplifying the control process and rapidly driving the motor.

In an example, when the starting unit is incapable of operating normally, the control unit designates one of the relay units as the new starting unit according to a predetermined sequence. Thus, the malfunctioning stator modules can be indicated in a predetermined sequence, thereby permitting easy maintenance of the malfunctioning stator modules.

In an example, the control unit determines whether the starting unit operates normally according to an electromotive force signal of the starting unit and obtains a rotational position of the rotor. Thus, whether the starting unit malfunctions can be determined by detecting whether the coils of the starting unit generate the electromotive force under induction by the magnetic field, thereby permitting selection of the starting unit which leads to a stable operation of the motor.

In an example, the control unit detects a change in a position of the rotor via a sensing module. Thus, through use of the sensing module to determine the rotational position and the rotating speed of the rotor and use the rotational position and the rotating speed to control phase switching of the stator modules, the motor can be started to rotate and the rotating speed can be stabilized.

### BRIEF DESCRIPTION OF THE DRAWINGS

The present invention will become more fully understood from the detailed description given hereinafter and the accompanying drawings which are given by way of illustration only, and thus are not limitative of the present invention, and wherein:
FIG. 1 is a schematic view of a motor of a preferred embodiment according to the present invention.
FIG. 2 is a schematic view of a motor control mechanism of a preferred embodiment according to the present invention.
FIG. 3 is a flowchart illustrating a driving method of a preferred embodiment according to the present invention.

### DETAILED DESCRIPTION OF THE INVENTION

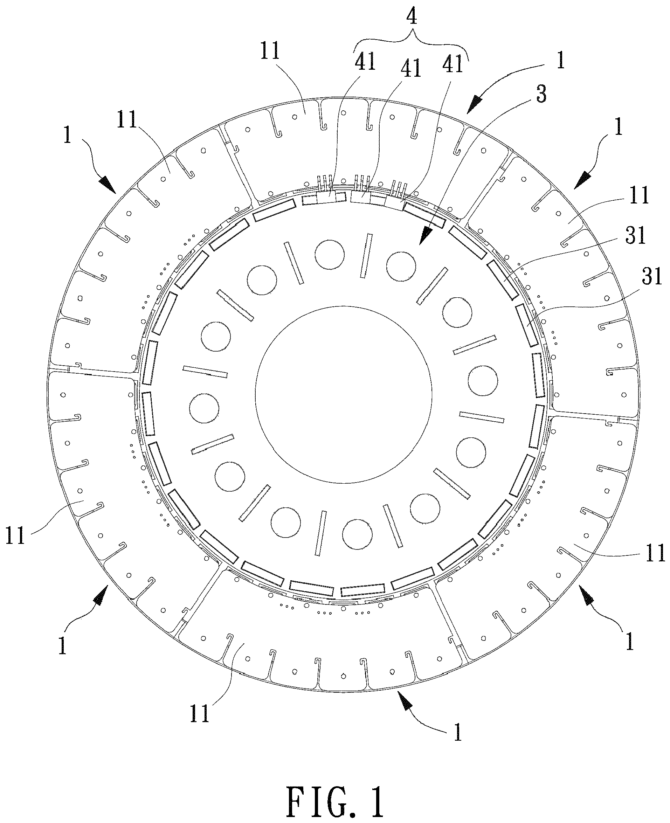

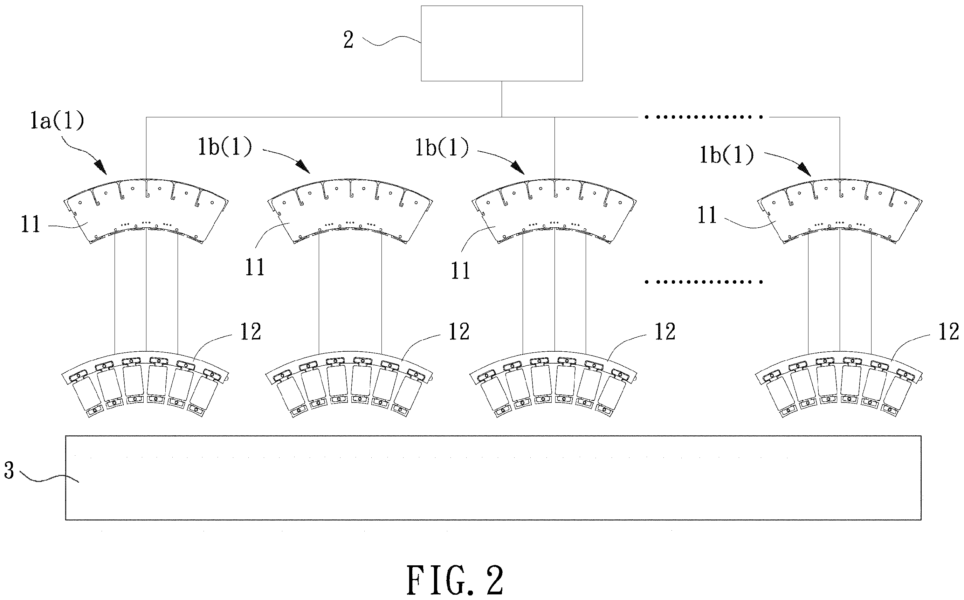

With reference to FIGs. 1 and 2, a motor with a plurality of stator modules of a preferred embodiment according to the present invention includes a plurality of stator modules 1, a control unit 2, and a rotor 3. The control unit 2 is coupled to the plurality of stator modules 1. The plurality of stator modules 1 may be detachably assembled and surround an outer periphery of the rotor 3 to form an inner-rotor motor. Alternatively, the rotor 3 may surround the plurality of stator modules 1 to form an outer-rotor motor. The present invention is not limited in this regard.

Each of the plurality of stator modules 1 includes a driving circuit 11 and a plurality of coils 12. The driving circuit 11 is electrically connected to the plurality of coils 12. Each driving circuit 11 alternately switches the plurality of coils 12 of different phases for energization. In this embodiment, six stator modules 1 are detachably assembled into a three-phased motor stator. Furthermore, each stator module 1 includes six coils 12 of three phases. The six coils 12 are respectively wound around six pole posts spaced at regular intervals, such that two coils 12 of the same phase are spaced by two pole posts therebetween.

The control unit 2 is coupled to the driving circuits 11. The control unit 2 designates one of the stator modules 1 as a starting unit 1a and designates the remaining stator modules 1 as relay units 1b. The control unit 2 may control the driving circuit 11 of the starting unit 1a to proceed with phase switching according to the operating condition of the motor and may control operation of the relay units 1b according to the phase switching of the starting unit 1a. When the original starting unit 1a malfunctions, the control unit 2 can stop the malfunctioning starting unit 1a and designate one of the relay units 1b as a new starting unit 1a. The control unit 2 may be disposed on one of the driving circuits 11. The control unit 2 may also be disposed on an independent circuit board which may be coupled to a motor stator or outside of the motor. The present invention is not limited in this regard.

The rotor 3 includes at least one magnetic member 31 which may have a plurality of magnetic poles formed thereon, such that the plurality of magnetic poles and the plurality of coils 12 on the plurality of stator modules 1 are aligned with each other and spaced from each other by an air gap. North poles and south poles of the plurality of magnetic poles are alternately disposed and face each of the plurality of stator modules 1. When the plurality of coils 12 of each of the plurality of stator modules 1 proceed with energization through regular and consistent phase change, the rotor 3 can be driven by stable electromagnetic force to rotate.

The control unit 2 may receive an electromotive force signal via the driving circuit 11 of the starting unit 1a. The electromotive force signal is a change in the induced electromotive force of the coils 12 of the starting unit 1a affected by the magnetic field. The control unit 2 may determine the rotational position and the rotating speed of the rotor 3 according to the electromotive force signal and use the rotational position and the rotating speed to control phase switching of the starting unit 1a.

Furthermore, as shown in FIG. 1, the motor with a plurality of stator modules according to the present invention may also include a sensing module 4 coupled to the control unit 2. The sensing module 4 may include a plurality of sensing units 41 each of which may be a Hall sensor. The plurality of sensing units 41 may be disposed on one of the plurality of stator modules 1. When the rotor 3 rotates relative to the plurality of stator modules 1 and the plurality of sensing units 41, the sensing module 4 can detect the magnetic field change caused by alternate passing of the north and south poles of the at least one magnetic member 31. Therefore, the control unit 2 can determine the rotational position and the rotating speed of the rotor 3 via the sensing module 4 and use the rotational position and the rotating speed to control phase switching of the starting unit 1a.

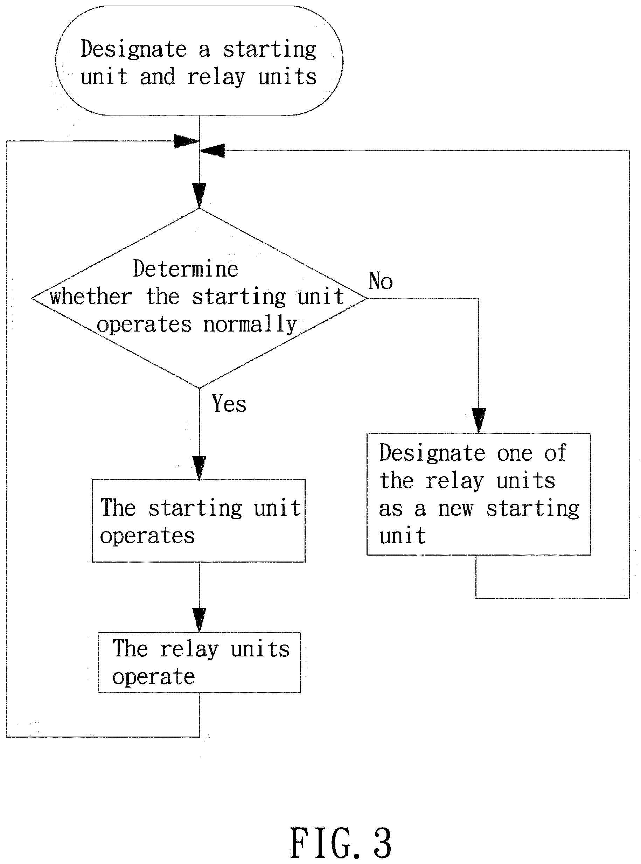

Please refer to FIG. 3 showing a motor driving method of a preferred embodiment for driving the motor with a plurality of stator modules according to the present invention. The method includes the following steps. Firstly, the control unit 2 designates one of the plurality of stator modules 1 as a starting unit 1a, and the remaining stator modules 1 will be regarded as relay units 1b by the control unit 2. Before starting the motor or during the operation of the motor, the control unit 2 will determine whether the starting unit 1a operates normally. When it is determined that the starting unit 1a is incapable of operating normally, the control unit 2 stops the malfunctioning starting unit 1a and designates one of the relay units 1b as a new starting unit 1a. The control unit 2 will repeatedly determine whether the selected starting unit 1a operates normally until the selected starting unit 1a can operate normally. The control unit 2 can switch the phase of the starting unit 1a to thereby drive a rotor 3 to rotate relative to the starting unit 1a when it is determined that the starting unit 1a is capable of operating normally. The remaining relay units 1b operate according to the phase change of the starting unit 1a, such that a synchronous torque is generated between the rotor 3 and the plurality of stator modules 1.

When the control unit 2 determines that the starting unit 1a is incapable of operating normally, the control unit 2 may randomly designate one of the remaining stator modules 1 (the original relay units 1b) as the new starting unit 1a. Alternatively, the control unit 2 may decide the sequence of the stator modules 1 in advance. At the initial stage, the control unit 2 selects the first place stator module 1 as the starting unit 1a. During the driving process, if the first place stator module 1 malfunctions, the control unit 2 selects the second place stator module 1 as the next starting unit 1a, and so on. The sequence of the plurality of stator modules 11 may be arranged in a counterclockwise or clockwise manner or in a discontinuous manner. The present invention is not limited in this regard.

Furthermore, the control unit 2 may detect the rotational position and the rotating speed of the rotor 3 via the sensing module 4 while the control unit 2 is switching the phase of the starting unit 1a. The control unit 2 may also change the phase of the starting unit 1a according to a change in the rotational position of the rotor 3 and control the relay units 1b in response to the phase change of the starting change 1a, thereby stabilizing the torque acting on the rotor 3 to enhance the motor rotation efficiency.

In summary, in the motor with a plurality of stator modules and the driving method of the motor according to the present invention, by designating one of the stator modules as the starting unit, the starting unit can guide all stator modules to generate a synchronous torque without using a sensing unit or when the sensing unit malfunctions, such that the motor rotor can be smoothly started and maintain a stable rotating speed. In addition, the motor can still be driven to operate when a sensing unit or any stator module malfunctions. Therefore, the present invention enhances the motor working efficiency, enhances operational safety of the motor, and simplifies the motor structure.

## Claims

1. A motor **characterized in** comprising:
a plurality of stator modules (1) detachably assembled into a motor stator, wherein each of the plurality of stator modules (1) includes a driving circuit (11), and wherein each driving circuit (11) is electrically connected to a plurality of coils of an associated one of the plurality of stator modules (1);
a control unit (2) coupled to the driving circuits (11), wherein the control unit (2) designates one of the plurality of stator modules (1) as a starting unit (1a) and designates remaining stator modules (1) as relay units (1b); and
a rotor (3) including at least one magnetic member (31) corresponding to the plurality of coils of the plurality of stator modules (1), wherein the starting unit (1a) drives the rotor (3) to rotate, and wherein the relay units (1b) drive the rotor (3) according to a phase change of the starting unit (1a).

2. The motor as claimed in claim 1, **characterized in that** the control unit (2) receives an electromotive force signal of the starting unit (1a) via the driving circuit (11).

3. The motor as claimed in claim 1 or 2, **characterized in** further comprising a sensing module (4) coupled to the control unit (2), wherein the sensing module (4) detects a magnetic field change caused by a movement of the rotor (3).

4. The motor as claimed in claim 3, **characterized in that** the sensing module (4) includes a plurality of sensing units (41) disposed on one of the plurality of stator modules (1), and wherein each of the plurality of sensing units (41) is a Hall sensor.

5. A driving method for a motor with a plurality of stator modules, **characterized in** comprising:
using a control unit (2) to designate one of the plurality of stator modules (1) as a starting unit (1a) and designate remaining stator modules (1) as relay units (1b);
using the control unit (2) to determining whether the starting unit (1a) operates normally, wherein when it is determined that the starting unit (1a) is incapable of operating normally, the control unit (2) designates one of the relay units (1b) as a new starting unit (1a) and proceeds with determination again; and
using the control unit (2) to switch a phase of the starting unit (1a) to drive a rotor (3) to rotate relative to the starting unit (1a) when it is determined that the starting unit (1a) is capable of operating normally, wherein the remaining relay units (1b) operate according to a phase change of the starting unit (1a), such that a synchronous torque is generated between the rotor (3) and the plurality of stator modules (1).

6. The driving method as claimed in claim 5, **characterized in that** when the starting unit (1a) is incapable of operating normally, the control unit (2) randomly designates one of the relay units (1b) as a new starting unit (1a).

7. The driving method as claimed in claim 5, **characterized in that** when the starting unit (1a) is incapable of operating normally, the control unit (2) designates one of the relay units (1b) as a new starting unit (1a) according to a predetermined sequence.

8. The driving method as claimed in one of claims 5 to 7, **characterized in that** the control unit (2) determines whether the starting unit (1a) operates normally according to an electromotive force signal of the starting unit (1a) and obtains a rotational position of the rotor (3).

9. The driving method as claimed in one of claims 5 to 8, **characterized in that** the control unit (2) detects a change in a position of the rotor (3) via a sensing module (4).

## Amended claims

### Amended claims in accordance with Rule 137(2) EPC.

1. A motor **characterized in** comprising:
a plurality of stator modules (1) assembled into a motor stator, wherein each of the plurality of stator modules (1) includes a driving circuit (11), and wherein each driving circuit (11) is electrically connected to a plurality of coils of an associated one of the plurality of stator modules (1);
a control unit (2) coupled to the driving circuits (11), wherein the control unit (2) designates one of the plurality of stator modules (1) as a starting unit (1a) and designates remaining stator modules (1) as relay units (1b); and
a rotor (3) including at least one magnetic member (31) corresponding to the plurality of coils of the plurality of stator modules (1), wherein the starting unit (1a) drives the rotor (3) to rotate, and wherein the relay units (1b) drive the rotor (3) according to a phase change of the starting unit (1a).

2. The motor as claimed in claim 1, **characterized in that** the control unit (2) receives an electromotive force signal of the starting unit (1a) via the driving circuit (11).

3. The motor as claimed in claim 1, **characterized in** further comprising a sensing module (4) coupled to the control unit (2), wherein the sensing module (4) detects a magnetic field change caused by a movement of the rotor (3).

4. The motor as claimed in claim 3, **characterized in that** the sensing module (4) includes a plurality of sensing units (41) disposed on one of the plurality of stator modules (1), and wherein each of the plurality of sensing units (41) is a Hall sensor.

5. A driving method for a motor with a plurality of stator modules, **characterized in** comprising:
using a control unit (2) to designate one of the plurality of stator modules (1) as a starting unit (1a) and designate remaining stator modules (1) as relay units (1b);
using the control unit (2) to determining whether the starting unit (1a) operates normally, wherein when it is determined that the starting unit (1a) is incapable of operating normally, the control unit (2) designates one of the relay units (1b) as a new starting unit (1a) and proceeds with determination again; and
using the control unit (2) to switch a phase of the starting unit (1a) to drive a rotor (3) to rotate relative to the starting unit (1a) when it is determined that the starting unit (1a) is capable of operating normally, wherein the remaining relay units (1b) operate according to a phase change of the starting unit (1a), such that a synchronous torque is generated between the rotor (3) and the plurality of stator modules (1).

6. The driving method as claimed in claim 5, **characterized in that** when the starting unit (1a) is incapable of operating normally, the control unit (2) randomly designates one of the relay units (1b) as a new starting unit (1a).

7. The driving method as claimed in claim 5, **characterized in that** when the starting unit (1a) is incapable of operating normally, the control unit (2) designates one of the relay units (1b) as a new starting unit (1a) according to a predetermined sequence.

8. The driving method as claimed in claim 5, **characterized in that** the control unit (2) determines whether the starting unit (1a) operates normally according to an electromotive force signal of the starting unit (1a) and obtains a rotational position of the rotor (3).

9. The driving method as claimed in claim 5, **characterized in that** the control unit (2) detects a change in a position of the rotor (3) via a sensing module (4).
